# EUROPEAN PATENT APPLICATION

(11) **EP 3 767 479 A1**
(43) Date of publication of application: **20.01.2021**
(21) Application number: 18917207.5
(22) Date of filing: 29.11.2018
(51) Int. Cl.: G06F 13/12

(54) **SMART TABLET, CHANNEL SWITCHING METHOD, AND COMPUTER READABLE STORAGE MEDIUM**

(30) Priority: 03.05.2018 CN 201810415872
(71) Applicant: Guangzhou Shiyuan Electronics Co., Ltd., Guangzhou, Guangdong 510530 (CN); Guangzhou Shirui Electronics Co., Ltd., Guangzhou, Guangdong 510530 (CN)
(72) Inventor: SU, Zhangyue, Guangzhou, Guangdong 510530 (CN); MU, Yanxiong, Guangzhou, Guangdong 510530 (CN); HUANG, Minqiang, Guangzhou, Guangdong 510530 (CN)
(74) Representative: ip21 Ltd
(86) International application number: PCT/CN2018/118173
(87) International publication number: WO 2019/210681

(57) **Abstract**

A smart tablet, a channel switching method, and a computer readable storage medium, which are applied in the technical field of terminals are provided. The smart tablet (100) comprises: at least two system processors (110), each system processor (110) corresponding to an operating system; a switching unit (120), which is connected to each system processor (110) respectively; a hub (130), which is connected to the switching unit (120); and at least two terminals (140), each terminal (140) being connected to the hub (130). The smart tablet, the channel switching method, and the computer readable storage medium are used to solve the problem in the existing technology wherein an operating system after smart tablet switching cannot identify a USB device plugged into a USB terminal corresponding to an operating system before switching, as well as the problems of low identification efficiency and complex operations due to the foregoing problem.

## Description

### Cross-Reference to Related Applications

The present application claims the priority of a Chinese patent application No. 201810415872.2, titled "smart tablet, channel switching method and computer readable storage medium", filed with CNIPA on May 3, 2018, which is incorporated herein by reference in its entirety.

### Technical Field

The application relates to the technical field of terminals, in particular to a smart tablet, a channel switching method and a computer readable storage medium.

### Background

At present, smart tablet generally supports multiple operating systems for controlling the smart tablet. Each operating system corresponds to an independent universal serial bus (USB) terminal. Specifically, each operating system corresponds to a system processor, and each system processor leads out to a USB terminal through an independent communication channel. Based on this, the current operating system of the smart tablet can communicate with an external USB device, through the USB terminal corresponding to the operating system processor.

However, when the operating system of the smart tablet is switched, the switched operating system can only recognize the USB device plugged into the USB terminal corresponding to switched operating system processor. In this way, if the USB device is still connected to the USB terminal corresponding to the pre-switching operating system processor, the switched operating system cannot recognize the USB device. It requires users to manually adjust the USB terminal, so the recognition efficiency is low and the operation mode is complex.

### Summary

In view of this, embodiments of the application provide an smart tablet, a channel switching method and a computer readable storage medium, which is used to solve the problem that the switched operating system of the smart tablet cannot recognize the USB device plugged into the corresponding USB terminal of the pre-switching operating system, and the problem of low recognition efficiency and complex operation.

In a first aspect, embodiments of the application provide a smart tablet, comprising: at least two system processors, each of which corresponds to an operating system; a switching unit connected with the system processors; a hub, connected with the switching unit; at least two terminals, each of which being connected with the hub.

In one implementation, the at least two system processors include: at least one first system processor supporting universal serial bus USB 3.0; and at least one second system processor supporting USB 2.0.

In one implementation, the hub is a USB 2.0 hub. When the at least two terminals include at least one USB 3.0 terminal and at least one USB 2.0 terminal, the smart tablet further includes a first signal repeater, connected between the USB 3.0 terminal and the first system processor.

In one implementation, each first system processor communicates with the switching unit through USB 2.0 channel; each second system processor communicates with the switching unit through USB 2.0 channel; the switching unit communicates with the hub through USB 2.0 channel; each terminal communicates with the hub through USB 2.0 channel; each USB 3.0 terminal communicates with each first signal repeater through USB 3.0 channel; and each first signal repeater communicates with each first system processor through USB 3.0 channel.

In one implementation, when the at least two terminals are USB 3.0 terminals, the hub is a USB 3.0 hub. The smart tablet also includes a second signal repeater, connected between the hub and each first system processor.

In one implementation, each first system processor communicates with the switching unit through USB 2.0 channel; each second system processor communicates with the switching unit through USB 2.0 channel; the switching unit communicates with the hub through USB 2.0 channel; each terminal communicates with the hub through USB 2.0 channel or USB 3.0 channel; the hub communicates with the second signal repeater through USB 3.0 channel; and the second signal repeater communicates with each first system processor through USB 3.0 channel.

In one implementation, when the at least two system processors are both the first system processors and the at least two terminals are both USB 3.0 terminals, each first system processor communicates with the switching unit through USB 2.0 channel or USB 3.0 channel; the switching unit communicates with the hub through USB 2.0 channel or USB 3.0 channel; and each terminal communicates with the hub through USB 2.0 channel or USB 3.0 channel.

In one implementation, when the at least two system processors are both second system processors and the at least two terminals are both USB 2.0 terminals. Each second system processor communicates with the switching unit through USB 2.0 channel; the switching unit communicates with the hub through USB 2.0 channel; and each terminal communicates with the hub through USB 2.0 channel.

In one implementation, the smart tablet also includes a microprocessor connected to the switching unit, and connected to a main system processor among the at least two system processors.

In one implementation, the microprocessor communicates with the switching unit through USB 2.0 channel, and the microprocessor communicates with the main system processor through USB 2.0 channel.

In one implementation, the operating system includes an external PC system, an internal Android / PC system or an internal Android / Television TV system.

In a second aspect, embodiments of the application provide a channel switching method, which is applied to the smart tablet as described in the first aspect. The method includes: the system processor of the current system of the smart tablet transmits a channel switching signal to the switching unit; and after receiving the channel switching signal, the switching unit turns on the channel between the system processor and the switching unit.

In one implementation, when the smart tablet also includes a microprocessor, the system processor of the current system of the smart tablet transmits a channel switching signal to the switching unit, includes: the system processor of the current system of the smart tablet transmits a channel switching signal to the microprocessor; and the microprocessor transmits the channel switching signal to the switching unit.

In one implementation, the channel switching signal includes an identifier of the channel between the system processor of the current system of the smart tablet and the switching unit.

In a third aspect, embodiments of the application provide a channel switching method, which is applied to the smart tablet as described in the first aspect and executed by the switching unit. The method includes: receiving a channel switching signal; turning on a channel indicated by the channel switching signal, to turn on the system processor of the current system and the switching unit.

In a fourth aspect, embodiments of the present application provides a computer readable storage medium, including a computer executable instruction for executing the channel switching method as described in the third aspect, if executed.

In a fifth aspect, embodiments of the application provide a channel switching method, which is applied to the smart tablet as described in the first aspect. The method includes: receiving a channel switching signal transmitted by the system processor of the current system; and transmitting the channel switching signal to the switching unit.

In a sixth aspect, embodiments of the present application provide a computer readable storage medium, including a computer executable instruction for executing the channel switching method as described in the third aspect, if executed.

At least one of the above embodiments has the following beneficial effects: the smart tablet is installed with a plurality of operating systems, each of which corresponds to a system processor, and the plurality of system processors are connected with the switching unit. The switching unit is connected with the hub, and the hub is connected with a plurality of terminals. In the smart tablet, each system processor corresponding to the respective operating system can be connected with a plurality of terminals through switching unit and hub. That is to say, each system processor can identify each terminal when the processor is connected with the switching unit. Even if the switching of the operating system occurs in the smart tablet, the identification of the external device plugged into the terminal by the switched operating system processor will not be affected, without the need of manually switching the USB device by the user, which improves the identification efficiency and is simple and reliable. Therefore, the embodiments of the application can solve the problem that the switched operating system of the smart tablet cannot recognize the USB device plugged into the corresponding USB terminal of the pre-switching operating system, and thus the problem of low recognition efficiency and complex operation.

### Description of Drawings

In order to more clearly explain the technical solutions of embodiments of the application, the following will briefly introduce the drawings needed in embodiments. Obviously, the drawings described below are only some embodiments of the application. For those skill in the art, other drawings can be derived from these drawings, without creative work.
Fig. 1 is a structural diagram of a smart tablet provided by an embodiment of the application;
Fig. 2 is a flow diagram of a channel switching method provided by an embodiment of the application;
Fig. 3 is a structural diagram of a further smart tablet provided by an embodiment of the application;
Fig. 4 is a structural diagram of a further smart tablet provided by an embodiment of the application;
Fig. 5 is a structural diagram of a further smart tablet provided by an embodiment of the application;
Fig. 6 is a structural diagram of a further smart tablet provided by an embodiment of the application;
Fig. 7 is a structural diagram of a further smart tablet provided by an embodiment of the application;
Fig. 8 is a flow diagram of a further channel switching method provided by an embodiment of the application;
Fig. 9 is a structural diagram of a further smart tablet provided by an embodiment of the application;
Fig. 10 is a structural diagram of a further smart tablet provided by an embodiment of the application;
Fig. 11 is a structural diagram of a further smart tablet provided by an embodiment of the application;
Fig. 12 is a flow diagram of a further channel switching method provided by an embodiment of the application;
Fig. 13 is a flow diagram of a further channel switching method provided by an embodiment of the application.

### Detailed Description

In order to better understand the technical solution of the application, embodiments of the application are described in detail with the attached drawings. It should be clear that the described embodiments are only parts of embodiments of the present application, not all the embodiments. Based on embodiments of the application, all other embodiments derived by those skill in the art without creative word belong to the scope of protection of the application.

The terms used in embodiments of the present application are for the purpose of describing specific embodiments only, and not for limiting the application. The singular forms "one", "said" and "the" used in embodiments of the present application and the appended claims are also intended to include plurality forms, unless otherwise clearly indicated in the context.

It should be understood that the term "and / or" used in this paper is only a description of the association relationship of associated objects. This means that there can be three kinds of relationships, for example, A and / or B, which can mean that there are three situations: A alone, A and B, and B alone. In addition, the character "/" herein generally indicates that the relationship between the front and rear associated objects is a "or".

It should be understood that although the terms first, second, third, etc. may be used to describe terminals and the like in embodiments of the present application, these terminals shall not be limited to these terms. These terms are used only to distinguish terminals from each other. For example, without departing from the scope of embodiments of the present application, the first terminal may also be referred to as the second terminal, and similarly, the second terminal may also be referred to as the first terminal.

Depending on the context, the wording "if" as used here can be interpreted as "when" or "in the situation..." or "response to determination" or "response to detection". Similarly, depending on the context, the phrase "if determined" or "if detected (stated condition or event)" can be interpreted as "when determined" or "responsive to determination" or "when detected (stated condition or event)" or "responsive to detection (stated condition or event)".

Embodiments of the application provide an smart tablet, which is used to solve the problem that the operating system of the smart tablet in the prior art cannot recognize the USB device plugged into the corresponding USB terminal of the pre-switching operating system, and thus the problem of low recognition efficiency and complex operation. The smart tablet includes a plurality of system processors and a plurality of terminals, and the plurality of system processors are connected with a plurality of terminals through switching unit and the hub, so that when the smart tablet is in any operating system, the corresponding system processor can connect with each terminal through the switching unit and the hub, therefore, to realize the identification of external devices plugged into any terminal.

Under the guidance of this idea, embodiments of this solution provide the following feasible implementations.

### Embodiment 1

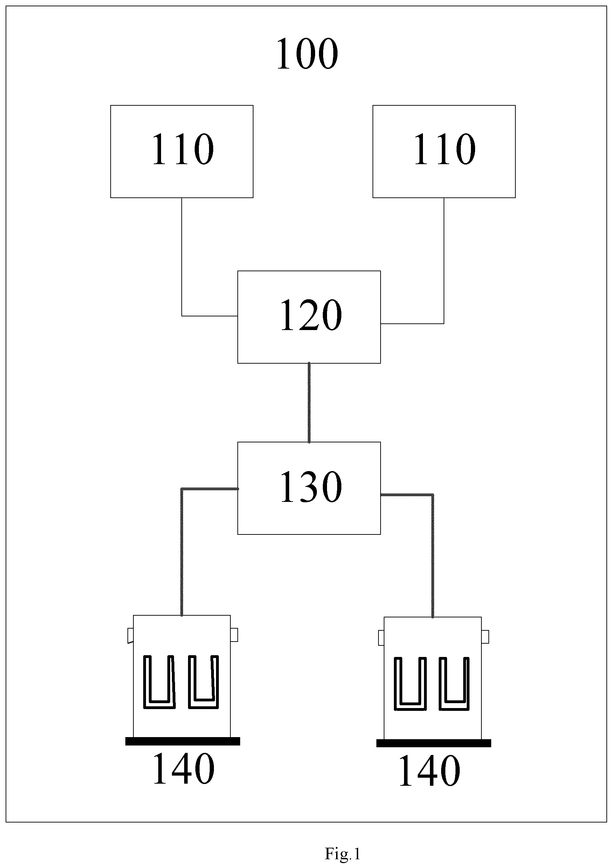

Referring to Fig. 1, the smart tablet 100 includes: at least two system processors 110, each of which corresponding to an operating system; a switching unit 120 connected with the system processors 110; a hub 130, connected with the switching unit; at least two terminals 140, each of which being connected to the hub 130. In an embodiment, the number of terminals 140 and the number of system processors 110 of the operating system can be set as required. The embodiment of the application has no limitation to whether the number of terminals is equal to the number of system processors 110.

In the smart tablet 100 as shown in Fig. 1, the electrical conduction state can be maintained between each terminal 140 and the hub 130, and between the hub 130 and the switching unit 120. Then, when the operating system of the smart tablet 100 is switched, this can be achieved by switching the conduction state between at least two system processors 110 and the switching unit 120.

Based on the above structure, the embodiment of the application briefly explains the working principle of the channel switching method in the smart tablet.

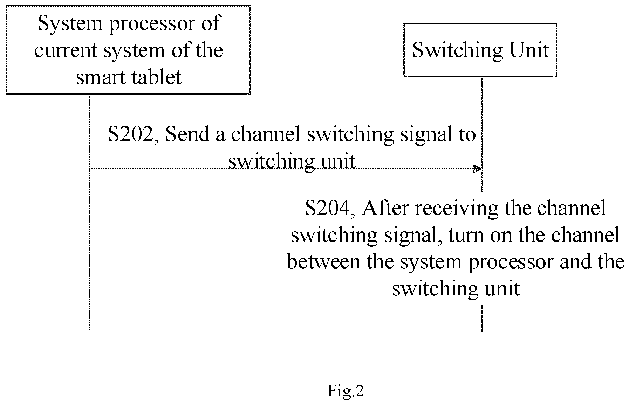

As shown in Fig. 2, the method for realizing channel switching of the smart tablet includes the following steps: S202, the system processor of the current system of smart tablet transmits a channel switching signal to the switching unit; and S204, after receiving the channel switching signal, the switching unit turns on the channel between the system processor and the switching unit.

The channel switching signal may include but is not limited to an identifier of the channel between the system processor and the switching unit of the system of the smart tablet. Based on the identifier of the channel, the switching unit can determine which channel to turn on.

The types of terminal 140 involved in the embodiment of the application can include but are not limited to universal serial bus (USB), and can also be set as other types of external communication interface when the solution is actually implemented. In order to facilitate understanding, the solution is described in detail taking the following USB terminals as an example.

The types of USB terminals may include but are not limited to: USB 2.0 terminals and / or USB 3.0 terminals. The USB 2.0 terminal can communicate with USB device 2.0. The USB 3.0 terminal can identify USB 2.0 device and USB 3.0 device, and can communicate with SUB 2.0 device by USB 2.0 protocol, and can communicate with USB 3.0 device by USB 3.0 protocol. At present, a general operating system processor can support USB 2.0. Whereas in the embodiment of the application, it can be set as required whether the system processor of the operating system operable in the smart tablet 100 supports USB 3.0. Moreover, the embodiment of the application has also no limitation to whether the operating system is a built-in operating system or an external operating system. In the actual implementation scenario, the operating system involved in the embodiment of the application can include but is not limited to: external personal computer (PC) system, built-in Android / PC system or built-in Android / Television (TV) system.

In order to facilitate the processing, it can also be set as required whether the switching unit 120 and the hub 130 support USB 3.0.

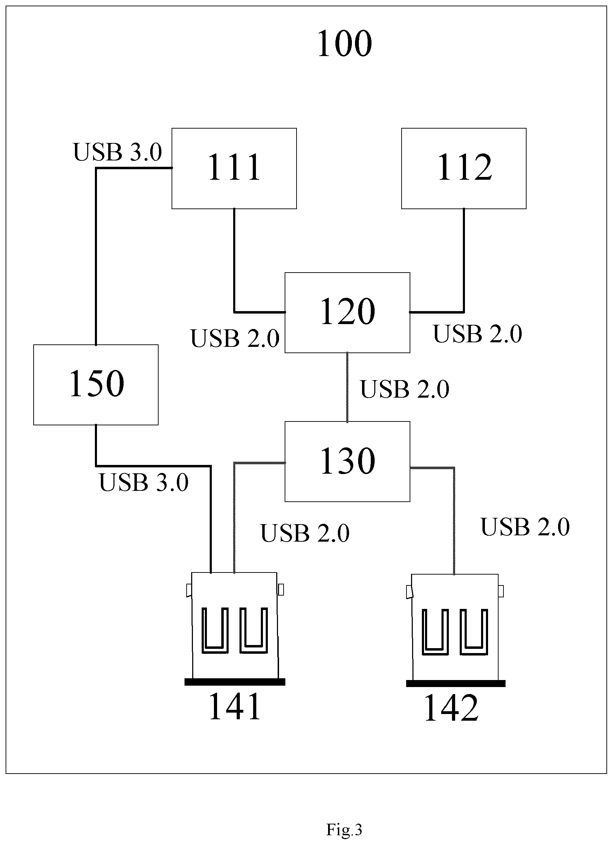

Based on this, according to whether the system processor 110 of the operating system supports USB 3.0, there can be the following situations:
Referring to Fig. 3, in the first situation, at least two system processors 110 in the smart tablet 100 include at least one first system processor 111 supporting universal serial bus USB 3.0 and at least one second system processor 112 supporting USB 2.0. The hub 130 is a USB 2.0 hub, and at least one USB 3.0 terminal 141 and at least one USB 2.0 terminal 142 are included in the at least two terminals 140 .

At this time, the hub 130 and each terminal 140 can only communicate through USB 2.0. In order to meet the requirement that the USB 3.0 device can have faster communication speed when plugged into the USB 3.0 terminal 141, accordingly, the following can be set in the smart tablet 100: a first signal repeater 150, connected between the USB 3.0 terminal 141 and the first system processor 111.

Based on the above architecture, the communication mode between the elements in the smart tablet 100 shown in Fig. 3 is as follows: each first system processor 111 communicates with the switching unit 120 through USB 2.0 channel; each second system processor 112 communicates with the switching unit 120 through USB 2.0 channel; the switching unit 120 communicates with the hub 130 through USB 2.0 channel; each USB 3.0 terminal 141 communicates with each first signal repeater 150 through USB 3.0 channel; and each first signal repeater 150 communicates with each first system processor 111 through USB 3.0 channel.

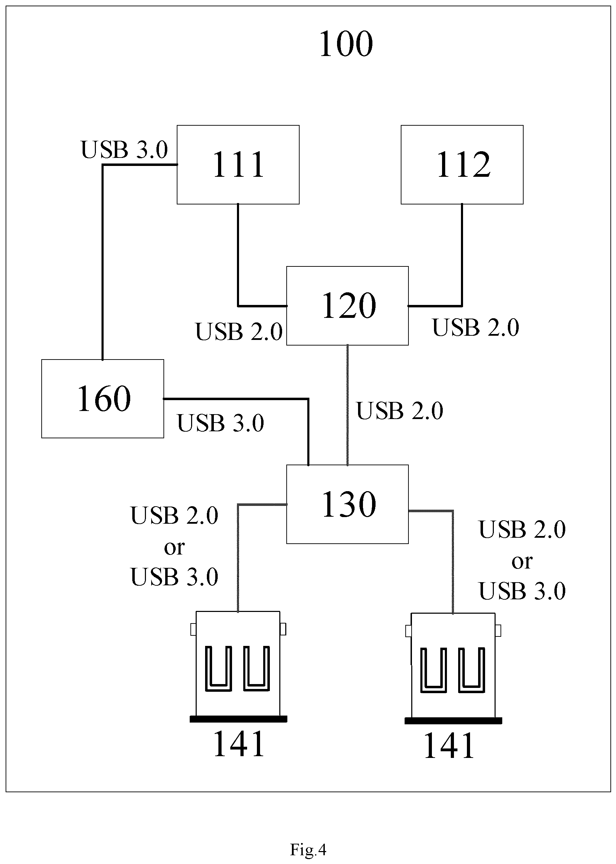

Referring to Fig. 4, in the second situation, at least two system processors 110 in the smart tablet 100 include at least one first system processor 111 supporting universal serial bus USB 3.0 and at least one second system processor 112 supporting USB 2.0. The hub 130 is a USB 3.0 hub when at least two terminals 140 are USB 3.0 terminals. At this time, the following can be set in the smart tablet 100: a second signal repeater 160, connected between the hub 130 and each first system processor 111.

Based on the above architecture, the communication mode between the devices in the smart tablet 100 shown in Fig. 4 is as follows: each first system processor 111 communicates with the switching unit 120 through USB 2.0 channel; each second system processor 112 communicates with the switching unit 120 through USB 2.0 channel; the switching unit 120 communicates with the hub 130 through USB 2.0 channel; each terminal 140 communicates with the hub 130 through USB 2.0 channel or USB 3.0 channel; the hub 130 communicates with the second signal repeater 160 through USB 3.0 channel; the second signal repeater 160 communicates with each first system processor 111 through USB 3.0 channel.

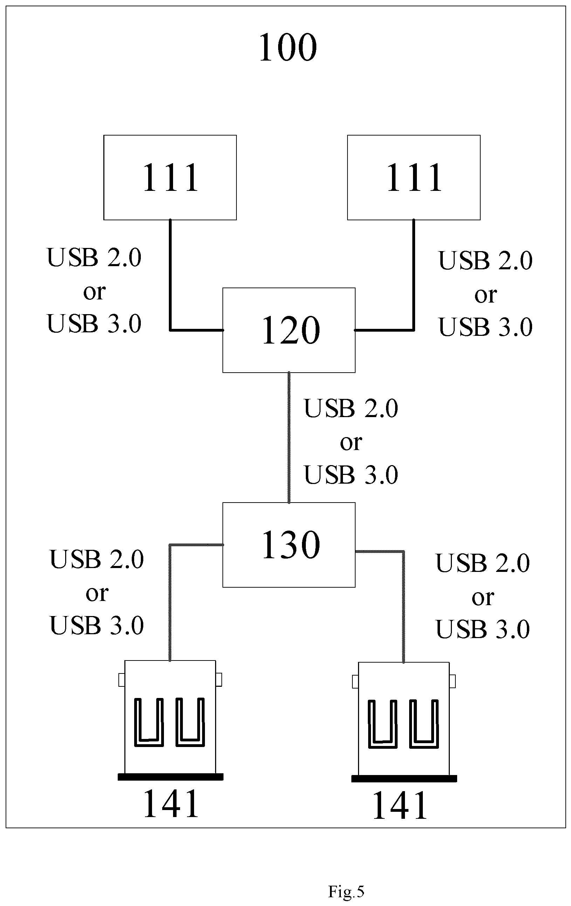

Referring to Fig. 5, in the third situation, when at least two system processors 110 in the smart tablet 100 are the first system processor 111 and at least two terminals 140 are USB 3.0 terminals 141, in this situation, accordingly, the communication mode between the elements in the smart tablet 100 shown in Fig. 5 is as follows: each first system processor 111 communicates with the switching unit 120 through USB 2.0 channel or USB 3.0 channel; the switching unit 120 communicates with the hub 130 through USB 2.0 channel or USB 3.0 channel; and each terminal 141 communicates with hub 130 through USB 2.0 channel or USB 3.0 channel.

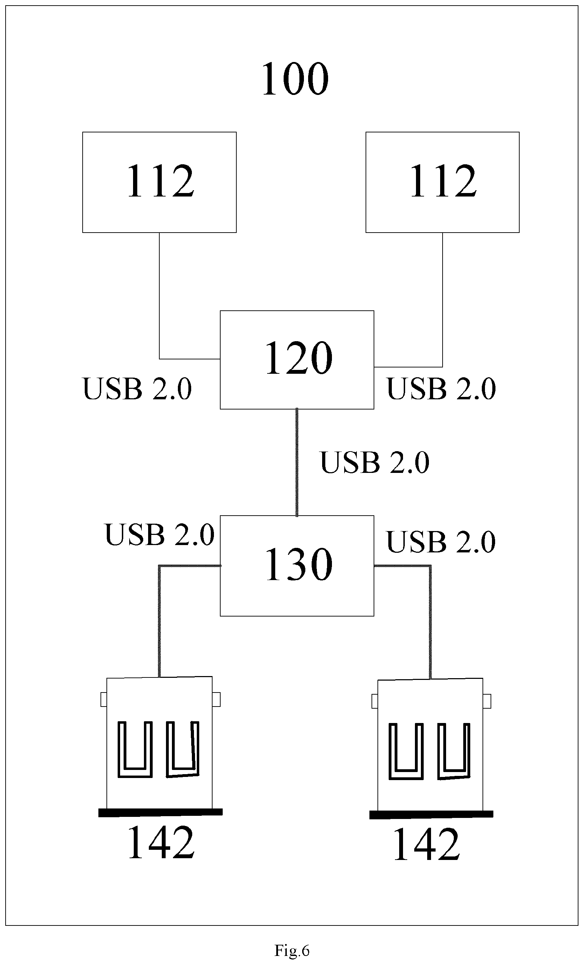

Referring to Fig. 6, in the fourth situation, when at least two system processors 110 in the smart tablet 100 are the second system processor 112 and at least two terminals 140 are USB 2.0 terminals 142, in this situation, accordingly, the communication mode between the elements in the smart tablet 100 shown in Fig. 6 is as follows: each second system processor 112 communicates with the switching unit 120 through USB 2.0 channel; and the switching unit 120 communicates with the hub 130 through USB 2.0 channel; each terminal 142 communicate with the hub 130 through USB 2.0 channel.

In the actual implementation process, based on the difference between the port types supported by the switching unit 120, hub 130, terminal 140 and the system processor 110, the communication mode can also be varied in other ways, and the embodiment of the application has no special limitation on this. The above four implementation modes are several feasible implementation modes of the smart tablet 100 provided by the embodiment of the application, which are only used to illustrate the solution, and not intentional to limit the application.

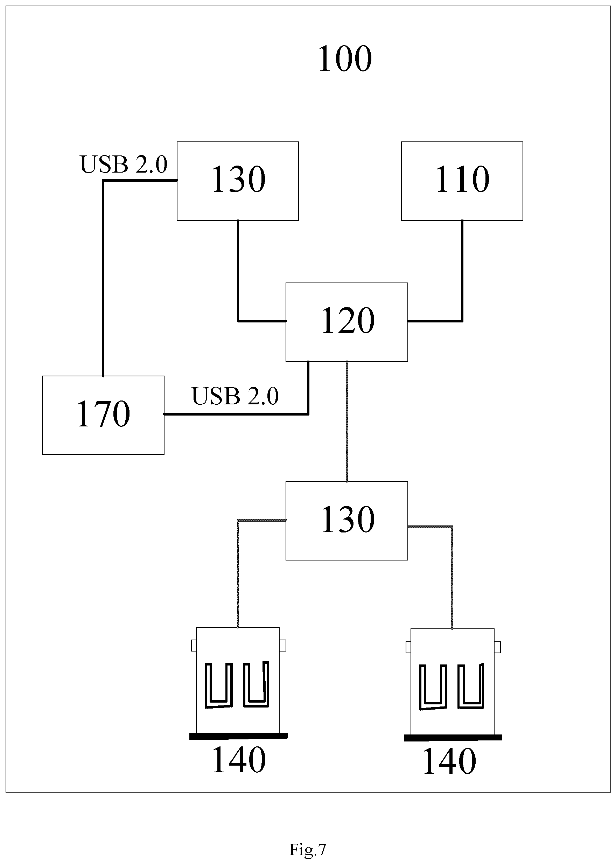

In a specific implementation scenario as shown in Fig. 7, the smart tablet according to an embodiment of the application can also includes a microprocessor 170, connected to the switching unit 120 and further connected to the main system processors 113 of at least two system processors 110.

It should be noted that the main system processor 113 is one of the at least two system processors 110. The main system processor 113 can support only USB 2.0 or only USB 3.0.

When the processor supports USB 3.0, considering that the microprocessor (MCU) generally only supports USB 2.0, the communication between microprocessor 170 and switching unit 120 is via USB 2.0 channel, and the communication between microprocessor 170 and main system processor 110-1 is via USB 2.0 channel.

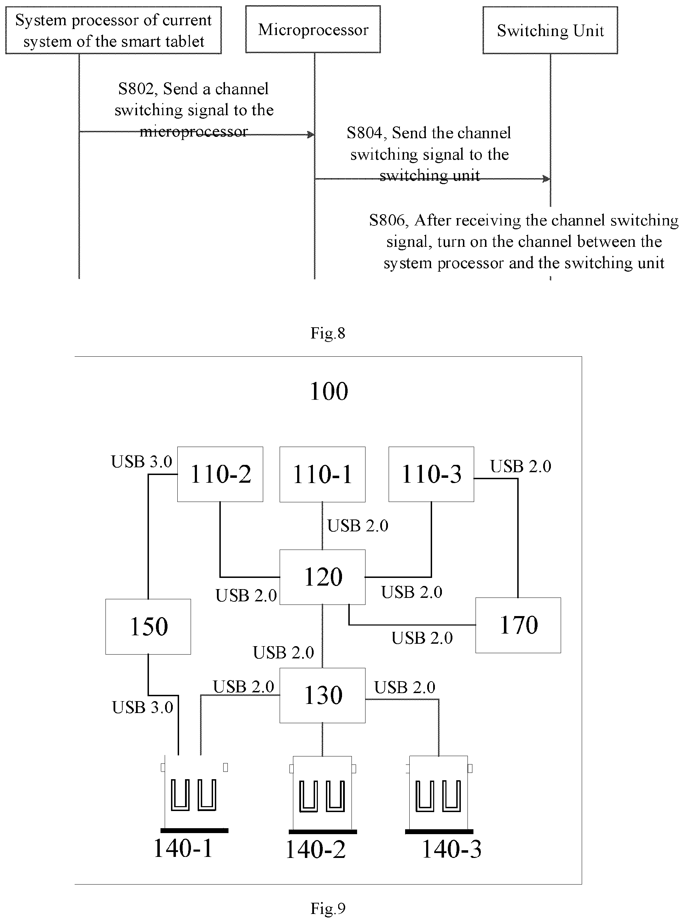

Then, based on the system architecture shown in Fig. 7, referring to Fig. 8, the control method of channel switching in the smart tablet 100 can include the following steps: at S802, the system processor of the current system of the smart tablet transmits a channel switching signal to the microprocessor. At S804, the microprocessor transmits the channel switching signal to the switching unit. At S806, after receiving the channel switching signal, the switching unit turns on the channel between the system processor and the switching unit.

In this process, the microprocessor is used to forward the channel switching signal transmitted by the system processor to the switching unit.

### Embodiment 2

Based on the smart tablet provided by the embodiment 1, in order to explain the solution more specifically, the embodiment of the application gives the following feasible system architecture of the smart tablet.

The three system processors corresponding to the three operating systems supported by the smart tablet 100 are respectively external PC system processor 110-1, built-in Android / PC system processor 110-2 and built-in Android / TV system processor 110-3. The smart tablet 100 includes a terminal 140-1, a terminal 140-2 and a terminal 140-3. Moreover, a microprocessor 170 for forwarding a channel switching signal is provided in the smart tablet 100.

The terminal 140-1 is a USB 3.0 terminal, and the terminal 140-2 and the terminal 140-3 are USB 2.0 terminals. The external PC system processor 110-1 and the built-in Android / TV system processor 110-3 only support USB 2.0. The built-in Android / PC system processor 110-2 supports USB 3.0, and the hub 130 and the switching unit 120 support USB 2.0.

Based on this, please refer to Fig. 9. The smart tablet 100 also includes a first signal repeater 150 and a microprocessor 170. The connection relationship of each element is as follows: the external PC system processor 110-1, the built-in Android / PC system processor 110-2 and the built-in Android / TV system processor 110-3 are respectively connected with the switching unit 120, communicating through USB 2.0 channel; the switching unit 120 is further connected with the microprocessor 170, communicating through USB 2.0 channel; the built-in Android / TV system processor 110-3 as the main system is further connected with the microprocessor 170, communicating through USB 2.0 channel; the switching unit 120 is further connected with the hub 130, communicating through USB 2.0 channel; terminals 140-1, 140-2 and 140-3 are respectively connected with hub 130, communicating through USB 2.0 channel; the terminal 140-1 is further connected with the first signal repeater 150, communicating through the USB 3.0 channel; the first signal repeater 150 is further connected to the built-in Android / PC system processor 110-2, communicating through USB 3.0 channel.

### Embodiment 3

Based on the smart tablet provided by embodiment 1, in order to explain the solution more specifically, the embodiment of the application gives the following feasible system architecture of the smart tablet.

The three system processors corresponding to the three operating systems supported by the smart tablet 100 are respectively external PC system processor 110-1, built-in Android / PC system processor 110-2 and built-in Android / TV system processor 110-3. Moreover, the smart tablet 100 includes a terminal 140-1, a terminal 140-2 and a terminal 140-3. Moreover, a microprocessor 170 for forwarding a channel switching signal is provided in the smart tablet 100.

The terminal 140-1, the terminal 140-2 and the terminal 140-3 are USB 3.0 terminals. The external PC system processor 110-1 and the built-in Android / TV system processor 110-3 only support USB 2.0. The built-in Android / PC system processor 110-2 supports USB 3.0. The hub 130 supports USB 3.0. The switching unit 120 supports USB 2.0.

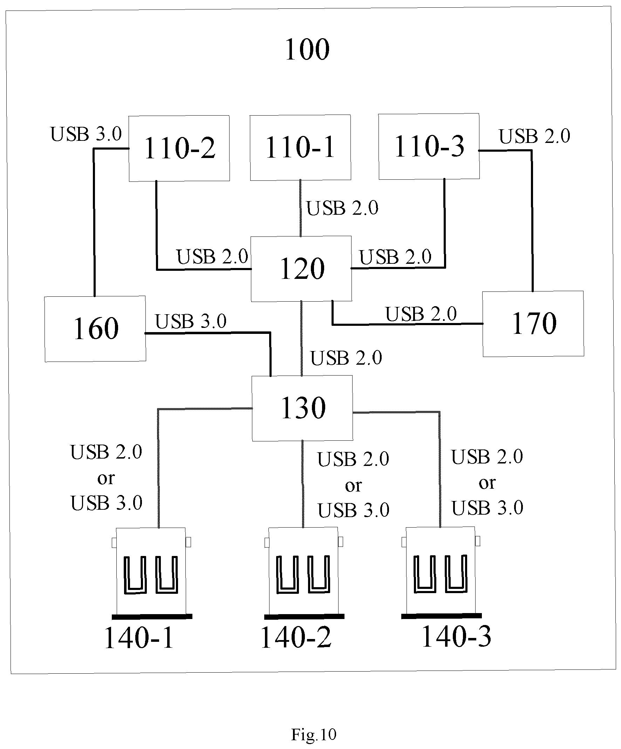

Based on this, please refer to Fig. 10, the smart tablet 100 also includes a second signal repeater 160 and a microprocessor 170. The connection relationship of each elements is as follows: the external PC system processor 110-1, the built-in Android / PC system processor 110-2 and the built-in Android / TV system processor 110-3 are respectively connected with the switching unit 120, communicating through USB 2.0 channel; the switching unit 120 is further connected with the microprocessor 170, communicating through USB 2.0 channel; the built-in Android / TV system processor 110-3 as the main system is further connected with the microprocessor 170, communicating through USB 2.0 channel; the switching unit 120 is further connected with the hub 130, communicating through USB 2.0 channel; terminals 140-1, 140-2 and 140-3 are respectively connected with the hub 130, communicating through USB 2.0 channel or USB 3.0 channel; the hub 130 is further connected with a first signal repeater 150, communicating through USB 3.0 channel; the first signal repeater 150 is also connected to the built-in Android / PC system processor 110-2, communicating through USB 3.0 channel.

### Embodiment 4

Based on the smart tablet provided by embodiment 1, in order to explain the solution more specifically, the embodiment of the application gives the following feasible system architecture of the smart tablet.

The three system processors corresponding to the three operating systems supported by the smart tablet 100 are respectively external PC system processor 110-1, built-in Android / PC system processor 110-2 and built-in Android / TV system processor 110-3. Moreover, the smart tablet 100 includes a terminal 140-1, a terminal 140-2 and a terminal 140-3. Moreover, a microprocessor 170 for forwarding a channel switching signal is provided in the smart tablet 100.

The terminal 140-1, the terminal 140-2 and the terminal 140-3 are USB 3.0 terminals. The external PC system processor 110-1, the built-in Android / TV system processor 110-3 and the built-in Android / PC system processor 110-2 all support USB 3.0. The hub 130 supports USB 3.0. The switching unit 120 supports USB 3.0.

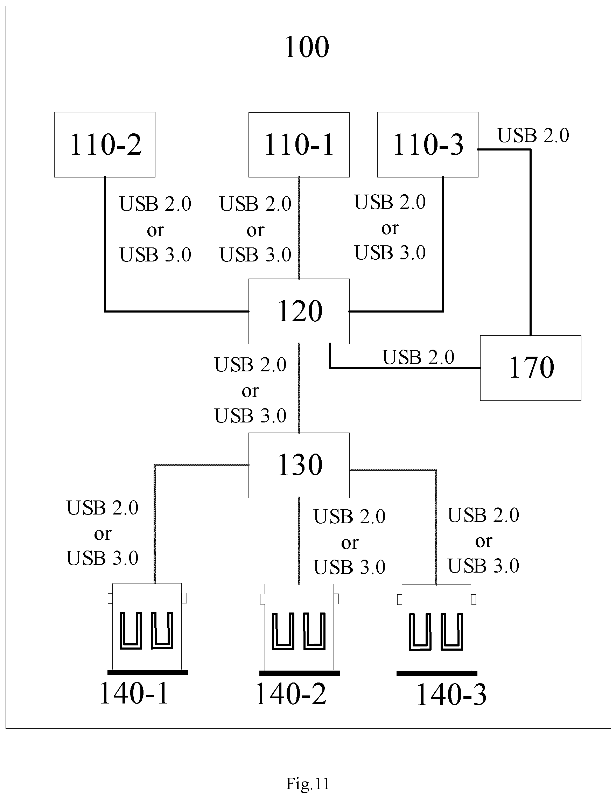

Based on this, please refer to Fig. 11. The smart tablet 100 further includes a microprocessor 170. The connection relationship of each elements is as follows: the external PC system processor 110-1, the built-in Android / PC system processor 110-2 and the built-in Android / TV system processor 110-3 are respectively connected with the switching unit 120, communicating through USB 2.0 channel or USB 3.0 channel; the switching unit 120 is further connected with the microprocessor 170, communicating through USB 2.0 channel; the built-in Android / TV system processor 110-3 as the main system is further connected with the microprocessor 170, communicating through USB 2.0 channel; the switching unit 120 is also connected with the hub 130, communicating through USB 2.0 channel or USB 3.0 channel; terminals 140-1, 140-2 and 140-3 are respectively connected with the hub 130, communicating through USB 2.0 channel or USB 3.0 channel.

### Embodiment 5

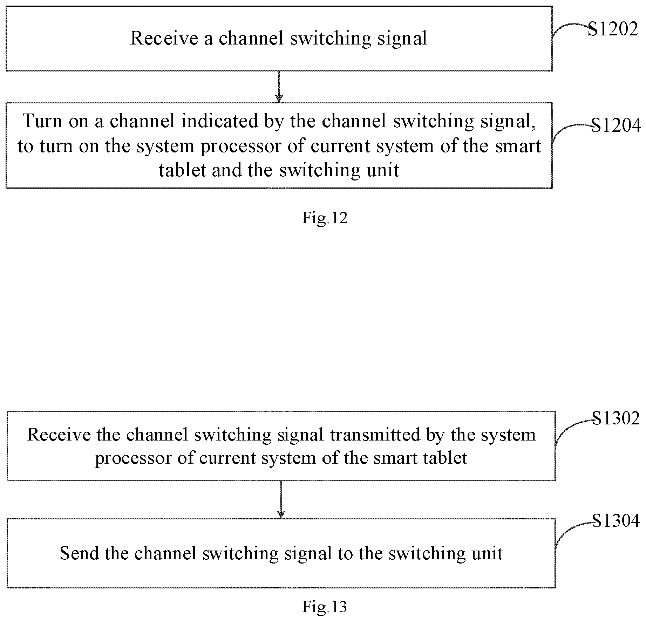

Based on the above smart tablet, the embodiment of the application provides a channel switching method executed on the switching unit. Please refer to Fig. 12, the method includes the following steps. At S1202, receiving a channel switching signal; and at S1204, turning on the channel indicated by the channel switching signal to turn on the system processor and switching unit of the current system of the smart tablet. Based on the channel switching method as shown in Fig. 12, the embodiment of the application also provides a computer readable storage medium, including a computer executable instruction for executing the channel switching method as shown in Fig. 12, if executed.

### Embodiment 6

Based on the above smart tablet, the embodiment of the application provides a channel switching method executed on a microprocessor. Please refer to Fig. 13, the method includes the following steps. At S1302, receiving an channel switching signal transmitted by the system processor of the current system of the smart tablet. At S1304, transmitting the channel switching signal to the switching unit.

Based on the channel switching method as shown in Fig. 13, the embodiment of the application further provides a computer readable storage medium, including a computer executable instruction for executing the channel switching method as shown in Fig. 13, if executed.

At least one technical solution of the above embodiments provided by the application has the following beneficial effects.

In embodiments of the application, the smart tablet includes a plurality of operating systems, each of which corresponds to a system processor. The plurality of system processors are connected with the switching unit, and the switching unit is connected with the hub, and the hub is connected with a plurality of terminals. In the smart tablet, the system processors corresponding to each operating system can be connected with a plurality of terminals through the switching unit and the hub. That is to say, each system processor can identify each terminal on the premise of conduction with the switching unit. Even if the operating system switching occurs in the smart tablet, the identifier of the external device plugged into the terminal by the switched operating system processor will not be affected, without the need of manually switching the USB device by the user, which improves the identification efficiency and is simple and reliable. Therefore, the technical solution provided by the embodiment of the application can solve the problem that the switched operating system of the smart tablet cannot recognize the USB device plugged into the corresponding USB terminal of the pre-switching operating system, and thus the problem of low recognition efficiency and complex operation.

Those skilled in the art can clearly understand, for the convenience and conciseness of the description, the specific working processes of the system, devices and units described above can refer to the corresponding process in the embodiment of the above method, and will not be repeated here.

In the several embodiments provided by this application, it should be understood that the disclosed systems, devices and methods can be realized in other ways. For example, the device embodiment described above is only schematic. For example, the division of the unit is only a kind of logical function division. There may be other division methods in actual implementation, for example, a plurality of units or components can be combined or integrated into another system, or some features can be ignored or not implemented. On the other hand, the mutual coupling or direct coupling or communication connection shown or discussed may be indirect coupling or communication connection through some interfaces, devices or units, and may be in the form of electrical, mechanical or other forms.

The units described as a separation component may be or may not be physically separated, and the components shown as a unit may be or may not be a physical unit. That is, it may be located in one place or distributed over a plurality of network units. Some or all units can be selected according to the actual needs to realize the purpose of the embodiment solution.

In addition, each functional unit in each embodiment of the present application can be integrated into one processing unit, or each unit may exist independently, or two or more units may be integrated in one unit. The integrated unit can be implemented in a form of hardware or hardware plus software function unit. The integrated unit realized in the form of software function unit can be stored in a computer readable storage medium. The software functional unit is stored in a storage medium and includes several instructions to enable a computer device (which may be a personal computer, a server, or a network device, etc.) or a processor to execute partial steps of the method described in each embodiment of the present application. The above storage medium includes U disk, mobile hard disk, read-only memory (ROM), random access memory (RAM), disk or optical disk and other medium that can store program code.

These above are only preferable embodiments of the application, and do not limit the application. Any modification, equivalent replacement, improvement, etc. made within the spirit and principles of the application shall be included in the scope of protection of the application.

## Claims

1. An smart tablet, comprising:
at least two system processors, each of which corresponding to an operating system;
a switching unit connected with the system processors;
a hub connected with the switching unit; and
at least two terminals, each of which being connected with the hub.

2. The smart tablet of claim 1, wherein, the at least two system processors include:
at least one first system processor supporting USB 3.0; and
at least one second system processor supporting USB 2.0.

3. The smart tablet of claim 2, wherein, the hub is a USB 2.0 HUB, and when the at least two terminals include at least one USB 3.0 terminal and at least one USB 2.0 terminal, the smart tablet further comprises:
a first signal repeater connected between the USB 3.0 terminal and the first system processor.

4. The smart tablet of claim 3, wherein,
each first system processor communicates with the switching unit through USB 2.0 channel;
each second system processor communicates with the switching unit through USB 2.0 channel;
the switching unit communicates with the hub through USB 2.0 channel;
each terminal communicates with the hub through USB 2.0 channel;
each USB 3.0 terminal communicates with each first signal repeater through USB 3.0 channel; and
each first signal repeater communicates with each first system processor through USB 3.0 channel.

5. The smart tablet of claim 2, wherein, when the at least two terminals are USB 3.0 terminals, the hub is a USB 3.0 hub; and the smart tablet further comprises:
a second signal repeater connected between the hub and each first system processor.

6. The smart tablet of claim 5, wherein,
each first system processor communicates with the switching unit through USB 2.0 channel;
each second system processor communicates with the switching unit through USB 2.0 channel;
the switching unit communicates with the hub through USB 2.0 channel;
each terminal communicates with the hub through USB 2.0 channel or USB 3.0 channel;
the hub communicates with the second signal repeater through USB 3.0 channel; and
the second signal repeater communicates with each first system processor through USB 3.0 channel.

7. The smart tablet of claim 1, wherein, when the at least two system processors are first system processors and the at least two terminals are USB 3.0 terminals,
each first system processor communicates with the switching unit through USB 2.0 channel or USB 3.0 channel;
the switching unit communicates with the hub through USB 2.0 channel or USB 3.0 channel; and
each terminal communicates with the hub through USB 2.0 channel or USB 3.0 channel.

8. The smart tablet of claim 1, wherein, when the at least two system processors are second system processors and the at least two terminals are USB2.0 terminals,
each second system processor communicates with the switching unit through USB 2.0 channel;
the switching unit communicates with the hub through USB 2.0 channel; and
each terminal communicates with the hub through USB 2.0 channel.

9. The smart tablet of any one of claims 1 to 8, wherein, the smart tablet further comprises:
a microprocessor connected to the switching unit, and connected to a main system processor among the at least two system processors.

10. The smart tablet of claim 9, wherein,
the microprocessor communicates with the switching unit through USB 2.0 channel; and
the microprocessor communicates with the main system processor through USB 2.0 channel.

11. The smart tablet of any one of claims 1 to 10, wherein, the operating system includes an external PC system, an built-in Android / PC system or an built-in Android / TV system.

12. A channel switching method that is applied to the smart tablet of any one of claims 1 to 11, **characterized in that** the method comprises:
a system processor of current system of the smart tablet transmitting a channel switching signal to the switching unit; and
after receiving the channel switching signal, the switching unit turning on a channel between the system processor and the switching unit.

13. The method of claim 12, wherein, when the smart tablet further comprises a microprocessor, the system processor of current system of the smart tablet transmits a channel switching signal to the switching unit, including:
the system processor of current system of the smart tablet transmitting the channel switching signal to the microprocessor; and
the microprocessor transmitting the channel switching signal to the switching unit.

14. The method of claim 12 or 13, wherein, the channel switching signal includes an identifier of the channel between the system processor of current system of the smart tablet and the switching unit.

15. A channel switching method that is applied to the smart tablet of any one of claims 1 to 11, and executed on the switching unit, **characterized in that** the method comprises:
receiving a channel switching signal; and
turning on an channel indicated by the channel switching signal to turn on the system processor of current system, and to turn on the switching unit.

16. A computer-readable storage medium, **characterized by** including: a computer executable instruction for executing the channel switching method of claim 15, if executed.

17. A channel switching method that is applied to the smart tablet of any one of claims 1 to 11 and executed on a microprocessor, **characterized in that** the method comprises:
receiving a channel switching signal transmitted by the system processor of current system of the smart tablet; and
transmitting the channel switching signal to the switching unit.

18. A computer-readable storage medium, **characterized by** including: a computer executable instruction for executing the channel switching method of claim 17, if executed.
